# EUROPÄISCHE PATENTSCHRIFT

(11) **EP 3 971 470 B1**
(45) Veröffentlichungstag und Bekanntmachung des Hinweises auf die Patenterteilung: **06.03.2024**
(21) Anmeldenummer: 20196499.6
(22) Anmeldetag: 16.09.2020
(51) Int. Cl.: F21S 41/365, F21S 41/37, F21S 41/147, F21S 41/27, F21S 41/675

(54) **HOCHAUFLÖSENDER FAHRZEUGSCHEINWERFER**
HIGH RESOLUTION VEHICLE HEADLAMP
PHARE DE VÉHICULE HAUTE RÉSOLUTION

(43) Veröffentlichungstag der Anmeldung: 23.03.2022
(73) Patentinhaber: ZKW Group GmbH, 3250 Wieselburg (AT)
(72) Erfinder: Knobloch, Christian, 3652 Leiben (AT); Pühringer, Jakob, 3370 Ybbs (AT); Karlinger, Günter, 3254 Bergland (AT); Kim, Bongho, Ansan, Kyeonggi-do 15399 (KR); Kim, Hyeonji, Gimpo-si, Gyeonggi-do 10073 (KR)
(74) Vertreter: Patentanwaltskanzlei Matschnig & Forsthuber OG

(56) Entgegenhaltungen:
- EP-A1- 3 530 520
- CN-U- 203 275 779
- DE-A1-102018 115 045
- DE-A1-102018 127 610
- DE-A1-102018 127 689
- US-A1- 2019 383 459

## Beschreibung

Die Erfindung betrifft einen hochauflösenden Fahrzeugscheinwerfer, insbesondere Kraftfahrzeugscheinwerfer, umfassend
- ein Lichtmodul zur Abgabe einer hochauflösend dynamisch veränderbaren Zwischenlichtverteilung,
- ein dem Lichtmodul nachgelagertes optisches Linsensystem zur Projektion der durch das Lichtmodul abgestrahlten Zwischenlichtverteilung in Form einer Endlichtverteilung auf einen vor den Fahrzeugscheinwerfer befindlichen Bereich, insbesondere eine Fahrbahn, wobei das Linsensystem einen aus einem einzigen Guss hergestellten optisch wirksamen Körper mit einer auf einer ersten Seite liegenden Lichteintrittsfläche und einer auf einer dazu beabstandeten zweiten Seite angeordneten Lichtaustrittsfläche umfasst, wobei der optisch wirksame Körper aus lichtdurchlässigem Material besteht, und im Strahlengang von der Lichteintrittsfläche zur Lichtaustrittsfläche zwei voneinander beabstandete lichtformende Spiegelflächen an oder in dem optisch wirksamen Körper ausgebildet sind, die dergestalt ausgeformt sind, dass
   * über die Lichteintrittsfläche in den Körper eintretendes und auf eine lichtformende zweite Spiegelfläche auftreffendes Licht auf eine erste Spiegelfläche reflektiert
   * und über diese lichtformende erste Spiegelfläche in Richtung der zweiten Seite reflektiert und durch die an der zweiten Seite angeordnete Lichtaustrittsfläche aus dem Körper nach außen abgestrahlt wird. Das Linsensystem weist eine unverstellbare, feste Brennweite auf.

Durch das Vorsehen von zwei lichtformenden Spiegelflächen innerhalb eines lichtleitenden Körpers können Scheinwerfersystem geschaffen werden, die frei von refraktiven Abbildungslinsen sind und damit besonders kompakt aufgebaut werden können. Zudem können durch Aufbringung der lichtformenden Elemente auf einem einzigen gemeinsamen Körper Positionierfehler der lichtformenden Elemente zueinander verhindert werden, die anderenfalls z.B. beim Einbau von körperlich voneinander getrennten lichtformenden Elementen entstehen können. Bisher wurden Fahrzeugscheinwerfer, die einen optisch wirksamen Körper der eingangs genannten Art aufweisen, auf die obig genannten Vorteile hin optimiert - nämlich das Weglassen von zusätzlichen lichtformenden Elementen und die erhöhte Genauigkeit der Abbildung bzw. eine damit einhergehenden verringerte Toleranzempfindlichkeit. Eine Aufgabe der Erfindung besteht darin, einen Fahrzeugscheinwerfer gemäß dem Stand der Technik weiter zu verbessern.

Die DE 10 2018 127689 A1, DE 10 2018 127610 A1, DE 10 2018 115045 A1 und die US 2019/383459 A1 zeigen Fahrzeugscheinwerfer aus dem Stand der Technik.

Diese Aufgabe wird mit einem Fahrzeugscheinwerfer der eingangs genannt Art gelöst, indem erfindungsgemäß das Lichtmodul zur Abgabe der hochauflösend dynamisch veränderbaren Zwischenlichtverteilung ein Lichtquellensystem zur Abgabe parallel gerichteter Lichtstrahlen sowie ein DMD-Modul umfasst, wobei das DMD-Modul zur Reflexion des parallel gerichtenten Lichts des Lichtquellensystems eingerichtet ist und damit zur Abstrahlung der hochauflösenden dynamisch veränderbaren Zwischenlichtverteilung auf die Lichteintrittsfläche des optisch wirksamen Körpers eingerichtet ist, wobei die Lichteintrittsfläche und die Lichtaustrittsfläche des optisch wirksamen Körpers plan ausgebildet ist und das DMD-Modul sowie der optisch wirksame Körper dergestalt zueinander orientiert und ausgebildet sind, dass die Lichtstrahlen der von dem DMD-Modul abgestrahlten Zwischenlichtverteilung orthogonal auf die Lichteintrittsfläche des optisch wirksamen Körpers einfallen, durch die lichtformende zweite und erste Spiegelfläche geformt werden und zur Ausbildung der Endlichtverteilung orthogonal durch die Lichtaustrittsfläche des optisch wirksamen Körpers austreten.

Dank der Erfindung kann auf einfache Weise eine Parallelausrichtung der Lichtstrahlen auf die Eintrittsfläche des optisch wirksamen Körpers vorgesehen sein. Durch das parallel einfallende Licht wird kann wiederum sichergestellt werden, dass unter Verwendung einer ebenen Lichteintrittsfläche der Einfallswinkel sämtlicher Lichtstrahlen gleich ist. Dieser Umstand wird bei der vorliegenden Erfindung gezielt genutzt, indem in einem Normalbetrieb die Strahlrichtung der auf die Lichteintrittsfläche einfallenden Lichtstrahlen so gewählt wird und die Lichteintrittsfläche so ausgebildet ist, dass die Lichtstrahlen in einem rechten Winkel (also orthogonal) auf die Lichteintrittsfläche einfallen. Damit kann brechungsbedingte Dispersion bzw. chromatische Aberration effektiv vermieden werden. Die Lichtaustrittsfläche ist in gleicher Weise normal (also orthogonal) zu den aus der Lichtaustrittsfläche austretenden Strahlen orientiert. Auf diese Weise wird ein bereits kompakt und genau funktionierendes Abbildungssystem, das eine scharfe Abbildung einer dynamisch veränderbaren Lichtverteilung ermöglicht, in überraschender Weise weiter verbessert, indem nun zusätzlich der technische Effekt erreicht wird, dass die von dem optisch wirksamen Körper bzw. durch seine Lichtaustrittsfläche abgestrahlte Endlichtverteilung weitgehend frei von Dispersionseffekten bzw. chromatischer Aberration ist. Unter dem Ausdruck "Endlichtverteilung" wird jene Lichtverteilung eines Fahrzeugscheinwerfers verstanden, die letztlich auf einen vor den Fahrzeugscheinwerfer liegenden Bereich projiziert werden soll. Es sind daher keine weiteren lichtformenden Elemente wie z.B. Linsen, insbesondere Projektionslinsen, im Strahlengang des Fahrzeugscheinwerfers nach der Lichtaustrittsfläche vorgesehen. Natürlich kann aber eine Abdeckscheibe vorgesehen sein, die den Scheinwerfer verschließt und keine relevanten lichtformenden Eigenschaften aufweist. Das Licht wird in dem optischen Körper (optional genau) zweimal reflektiert, nämlich von der zweiten Seite zurück zur ersten Seite und dann wieder z.B. in Lichteintrittsrichtung zurück in Richtung der zweiten Seite hin zur Lichtaustrittsfläche. Unter einem hochauflösenden Fahrzeugscheinwerfer wird ein Schweinwerfer verstanden, der zumindest abschnittsweise in horizontaler Richtung einzelne Segmente mit einer Winkelbreite von weniger als 1° gezielt ausleuchten bzw. ausblenden kann. Die Auflösung kann über den field of view - also den durch den Scheinwerfer beleuchtbaren Raumwinkel - konstant oder auch variabel sein und dies sowohl in vertikaler als auch in horizontalter Richtung. Durch die Erfindung wird Fahrzeugscheinwerfer mit einteiligem, achromatischem Objektiv geschaffen. Unter dem Ausdruck "Normalbetrieb" wird ein Betriebszustand des Scheinwerfers verstanden, in dem dieser Licht nach außen durch die Lichtaustrittsfläche hindurch abstrahlt, d.h. die Endlichtverteilung abstrahlt. Das bedeutet, dass sich zumindest einzelne Segmente des DMD-Moduls in einer Aktiv- bzw. On-Stellung befinden, und so Licht parallel zueinander orientiert auf die Lichteintrittsfläche lenken. Durch Einsatz des DMD-Moduls wird DLP-Technologie eingesetzt. Der Ausdruck "DMD" bedeutet "digital mirror device" und betrifft eine optische Vorrichtung, die dem Fachmann für sich genommen hinreichend aus dem Stand der Technik bekannt sind. Als Lichtquelle können insbesondere LED-Lichtquellen eingesetzt werden.

Insbesondere kann vorgesehen sein, dass die erste und die zweite lichtformende Spiegelfläche ausgebildet sind, indem die erste und die zweite Seite des optisch wirksamen Körpers jeweils in einem Abschnitt mit spiegelndem Material beschichtet sind, und zwar so, dass
* über die Lichteintrittsfläche in den Körper eintretendes und auf eine an der zweiten Seite angeordnete lichtformende zweite Spiegelfläche auftreffendes Licht zurück auf eine an der ersten Seite angeordnete lichtformende erste Spiegelfläche reflektiert
* und über diese lichtformende erste Spiegelfläche wieder in Richtung der zweiten Seite reflektiert und durch die an der zweiten Seite angeordnete Lichtaustrittsfläche aus dem Körper nach außen abgestrahlt wird. Die Ausdrücke "in Richtung der ersten Seite" und "in Richtung der zweiten Seite" bedeuten dabei nicht, dass damit nur ein einziger exakter Ausbreitungswinkel der Lichtstrahlen vorgesehen ist. Wie in den Figuren auch dargestellt ist, sind die erste und die zweite Seite flächig ausgebildet. D.h., dass eine Ausbreitung in Richtung einer Fläche bedeutet, dass der jeweilige Lichtstrahl diese Fläche erreicht, wobei die Ausbreitung entlang einer Gerade erfolgt. Unterschiedliche Lichtstrahlen können daher unterschiedlich geneigt sein und sich dennoch in übereinstimmende Richtung ausbreiten, sofern sie die genannte Fläche auf geradem Wege erreichen.

Weiters kann vorgesehen sein, dass die zweite Spiegelfläche als konkaver Spiegel und die erste Spiegelfläche als konvexer Spiegel ausgebildet ist.

Insbesondere kann vorgesehen sein, dass die erste Spiegelfläche auf der ersten Seite angeordnet ist und an die Lichteintrittsfläche angrenzt. Weiters kann vorgesehen sein, dass die zweite Spiegelfläche auf der zweiten Seite angeordnet ist und an die Lichtaustrittfläche LA angrenzt.

Es kann die zweite Spiegelfläche als konkaver Spiegel und die erste Spiegelfläche als konvexer Spiegel ausgebildet sein. Auch ist eine umgekehrte Anordnung möglich.

Insbesondere kann vorgesehen sein, dass der optisch wirksame Körper in einer Längsschnittdarstellung eine dritte und vierte Seite aufweist, wobei der optisch wirksame Körper durch die vier aneinander angrenzende zueinander geneigte Seiten gebildet aus erster bis vierter Seite umschlossen ist, wobei die erste Spiegelfläche an der dritten Seite und die zweite Spiegelfläche an der vierten Seite angeordnet ist und die erste und die zweite Seite im Wesentlichen L-förmig aneinander angrenzen.

Weiters kann vorgesehen sein, dass die Lichteintrittsfläche sowie der erste und der zweite Spiegel dergestalt ausgebildet und angeordnet sind, dass sich die über die Lichteintrittsfläche in den optisch wirksamen Körper eintretenden Lichtstrahlen - gesehen als eine Normalprojektion auf einen Längsschnitt durch den optisch wirksamen Körper - sich innerhalb von optischen Körper kreuzen.

Insbesondere kann vorgesehen sein, dass der optisch wirksame Körper entlang seiner kürzesten oberflächigen Verbindung von erster und zweiter Spiegelfläche frei von der Lichteintrittsfläche und der Lichtaustrittsfläche ist.

Alle Positionsangaben in Bezug auf den Scheinwerfer bzw. darin angeordneter Elemente beziehen sich auf eine Einbaulage des Fahrzeugscheinwerfers, in der dieser bestimmungsgemäß in einem betreffenden Fahrzeug aufgenommen ist, das sich in einer horizontalen Position befindet.

Insbesondere kann vorgesehen sein, dass die zweite Spiegelfläche als konkaver Spiegel und die erste Spiegelfläche als konvexer Spiegel ausgebildet ist.

Weiters kann vorgesehen sein, dass neben der Lichteintrittsfläche des optisch wirksamen Körpers auf dem optisch wirksamen Körper eine lichtundurchlässige lichtabsorbierende Absorberfläche angeordnet ist, die dergestalt angeordnet ist, dass die von dem DMD-Modul in einer Off-Stellung reflektierten Lichtstrahlen an der Absorberfläche absorbiert werden.

Insbesondere kann vorgesehen sein, dass eine von dem optisch wirksamen Körper räumliche getrennte Absorbereinheit zur Absorption von Licht vorgesehen ist, und neben der Lichteintrittsfläche des optisch wirksamen Körpers auf dem optisch wirksamen Körper eine dritte Spiegelfläche angeordnet ist, die dergestalt ausgebildet ist, dass die von dem DMD-Modul in einer Off-Stellung reflektierten Lichtstrahlen über die dritte Spiegelfläche hin zu der Absorbereinheit reflektiert werden.

Insbesondere kann vorgesehen sein, dass das lichtdurchlässige Material des optischen Körpers Glas ist. Alternativ dazu kann vorgesehen sein, dass das lichtdurchlässige Material des optischen Körpers Kunststoff ist.

Weiters kann vorgesehen sein, dass die Auflösung der Endlichtverteilung des Fahrzeugscheinwerfers dergestalt gewählt ist, dass zumindest einzelne einzeln ansteuerbare Leuchtpixel einen Raumwinkel von weniger als 0,1° sowohl in horizontaler als auch vertikaler Richtung ausleuchten. D.h., dass das Zusammenwirken aus Zwischenlichtverteilung und optisch wirksamen Körper entsprechend gewählt wird, um die genannte Auflösung zu erzielen.

Weiters kann vorgesehen sein, dass die zweite Seite des optisch wirksamen Körpers der ersten Seite gegenüber liegt.

Weiters kann die Erfindung ein Fahrzeug, umfassend einen erfindungsgemäßen Fahrzeugscheinwerfer (wie in den Ansprüchen angegeben), betreffen.

Die Erfindung ist im Folgenden anhand beispielhafter und nicht einschränkender Ausführungsformen näher erläutert, die in den Figuren veranschaulicht sind. Darin zeigt
- Figur 1: eine schematische perspektivische Darstellung eines erfindungsgemäßen Fahrzeugscheinwerfers,
- Figur 2: eine schematische Seitendarstellung des Linsensystems eines erfindungsgemäßen Fahrzeugscheinwerfers gemäß Figur 1,
- Figur 3: eine schematische Seitendarstellung eines Linsensystems eines erfindungsgemäßen Fahrzeugscheinwerfers in Verbindung mit einem zugehörigen Lichtmodul in einer zweiten Ausführungsform,
- Figur 4: eine schematische Seitendarstellung eines Linsensystems eines erfindungsgemäßen Fahrzeugscheinwerfers in Verbindung mit einem zugehörigen Lichtmodul in einer dritten Ausführungsform, und
- Figur 5: eine schematische Seitendarstellung eines Linsensystems eines erfindungsgemäßen Fahrzeugscheinwerfers in Verbindung mit einem zugehörigen Lichtmodul in einer vierten Ausführungsform.

In den folgenden Figuren bezeichnen - sofern nicht anders angegeben - gleiche Bezugszeichen gleiche Merkmale.

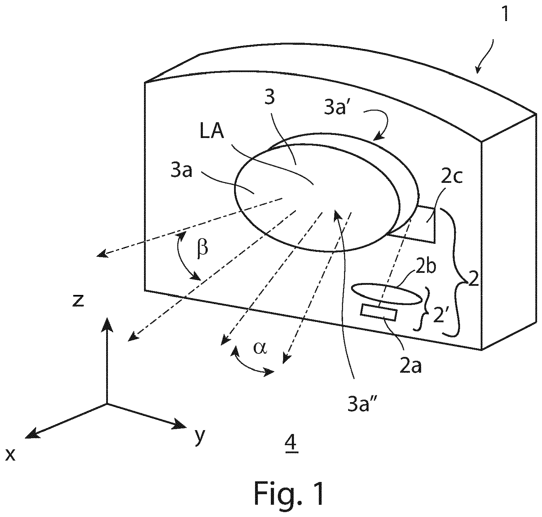

Figur 1 zeigt eine schematische perspektivische Darstellung eines erfindungsgemäßen Fahrzeugscheinwerfers 1. Es handelt sich dabei um einen hochauflösenden Fahrzeugscheinwerfer 1, insbesondere Kraftfahrzeugscheinwerfer, umfassend ein Lichtmodul 2 zur Abgabe einer hochauflösend dynamisch veränderbaren Zwischenlichtverteilung und ein dem Lichtmodul 2 nachgelagertes optisches Linsensystem 3 zur Projektion der durch das Lichtmodul 2 abgestrahlten Zwischenlichtverteilung in Form einer Endlichtverteilung auf einen vor den Fahrzeugscheinwerfer befindlichen Bereich, insbesondere eine Fahrbahn 4.

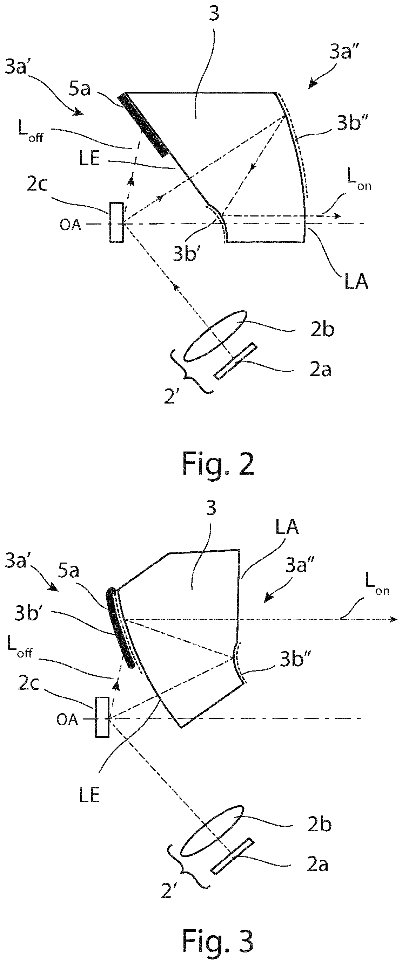

Das Linsensystem 3 umfasst einen aus einem einzigen Guss hergestellten optisch wirksamen Körper 3a mit einer auf einer ersten Seite 3a' liegenden Lichteintrittsfläche LE (siehe z.B. Fig. 2) und einer auf einer dazu beabstandeten zweiten Seite 3a" angeordneten Lichtaustrittsfläche LA. Der optisch wirksame Körper 3a besteht aus lichtdurchlässigem Material. Im Strahlengang von der Lichteintrittsfläche LE zur Lichtaustrittsfläche LA sind zwei voneinander beabstandete lichtformende Spiegelflächen 3b', 3b" (siehe z.B. Fig. 2) an oder in dem optisch wirksamen Körper 3a ausgebildet, die dergestalt ausgeformt sind, dass über die Lichteintrittsfläche LE in den Körper 3a eintretendes und auf eine lichtformende zweite Spiegelfläche 3b" auftreffendes Licht auf eine erste Spiegelfläche 3b' reflektiert und über diese lichtformende erste Spiegelfläche 3b' in Richtung der zweiten Seite 3a" reflektiert und durch die an der zweiten Seite 3a" angeordnete Lichtaustrittsfläche LA aus dem Körper 3a nach außen abgestrahlt wird.

Das Lichtmodul 2 umfasst zur Abgabe der hochauflösend dynamisch veränderbaren Zwischenlichtverteilung ein Lichtquellensystem 2' zur Abgabe parallel gerichteter Lichtstrahlen sowie ein DMD-Modul 2c. Das DMD-Modul 2c ist zur Reflexion des parallel gerichtenten Lichts des Lichtquellensystems 2' und damit zur Abstrahlung der hochauflösenden dynamisch veränderbaren Zwischenlichtverteilung auf die Lichteintrittsfläche LE des optisch wirksamen Körpers 3a eingerichtet. Die Lichteintrittsfläche LE und die Lichtaustrittsfläche LA des optisch wirksamen Körpers 3a sind dabei plan ausgebildet. Das bedeutet, dass jede Fläche innerhalb einer Ebene liegt. Das DMD-Modul 2c sowie der optisch wirksame Körper 3a sind dergestalt zueinander orientiert und ausgebildet, dass die Lichtstrahlen der von dem DMD-Modul 2c abgestrahlten Zwischenlichtverteilung orthogonal auf die Lichteintrittsfläche LE des optisch wirksamen Körpers 3a einfallen, durch die lichtformende zweite 3b" und erste Spiegelfläche 3b' geformt werden und zur Ausbildung der Endlichtverteilung orthogonal durch die Lichtaustrittsfläche LA des optisch wirksamen Körpers 3a austreten. Diese Lichtstrahlen sind in den folgenden Figuren auch mit dem Bezugszeichen Lₒₙ bezeichnet. Die Lichtstrahlen, die nicht Teil der Endlichtverteilung sein sollen (und damit auch nicht als Zwischenlichtverteilung auf die Lichteintrittsfläche projiziert werden), sind hingegen mit dem Bezugszeichen L_{off} versehen.

Fig. 2 zeigt eine schematische Seitendarstellung des Linsensystems eines erfindungsgemäßen Fahrzeugscheinwerfers 1 gemäß Figur 1. Darin ist erkennbar, dass die erste und die zweite lichtformende Spiegelfläche 3b' und 3b" so ausgebildet sind, dass die erste und die zweite Seite 3a" des optisch wirksamen Körpers jeweils in einem Abschnitt mit spiegelndem Material 3b', 3b" beschichtet sind, und zwar so, dass über die Lichteintrittsfläche LE in den Körper 3a eintretendes und auf eine an der zweiten Seite 3a" angeordnete lichtformende zweite Spiegelfläche 3b" auftreffendes Licht zurück auf eine an der ersten Seite 3a' angeordnete lichtformende erste Spiegelfläche 3b' reflektiert und über diese lichtformende erste Spiegelfläche 3b' wieder in Richtung der zweiten Seite 3a" reflektiert und durch die an der zweiten Seite 3a" angeordnete Lichtaustrittsfläche LA aus dem Körper 3a nach außen abgestrahlt wird. Die erste Spiegelfläche 3b' ist dabei auf der ersten Seite 3a' angeordnet und grenzt an die Lichteintrittsfläche an. Die zweite Spiegelfläche 3b" ist an der zweiten Seite 3a" angeordnet und grenzt an die Lichtaustrittsfläche LA an.

In der Ausführungsform gemäß Fig. 2 ist die zweite Spiegelfläche 3b" als konkaver Spiegel und die erste Spiegelfläche 3b' als konvexer Spiegel ausgebildet. Die Angaben "konvex" und "konkav" beziehen sich dabei immer auf die "Sicht" der auftreffenden Lichtstrahlen Lₒₙ, also jene Lichtstrahlen, die ausgehend von dem Lichtmodul 2 in den optisch wirksamen Körper 3a über die Lichteintrittsfläche LE eingebracht werden, dort auf die jeweilige Spiegelfläche auftreffen und dann wieder aus der Lichtaustrittsfläche LA austreten.. In Fig. 2 ist zudem erkennbar, dass die erste Spiegelfläche 3b' an einem unteren Ende der ersten Seite 3a' angeordnet ist. Es kann eine optische Achse OA der ersten Spiegelfläche 3b' vorgesehen sein, die mit einer optischen Achse OA der zweiten Spiegelfläche 3b" übereinstimmen kann. Dabei kann die Lichtaustrittfläche LA aus horizontaler Sicht mittig und aus vertikaler Sicht am unteren Ende der zweiten Seite 3b" angeordnet sein.

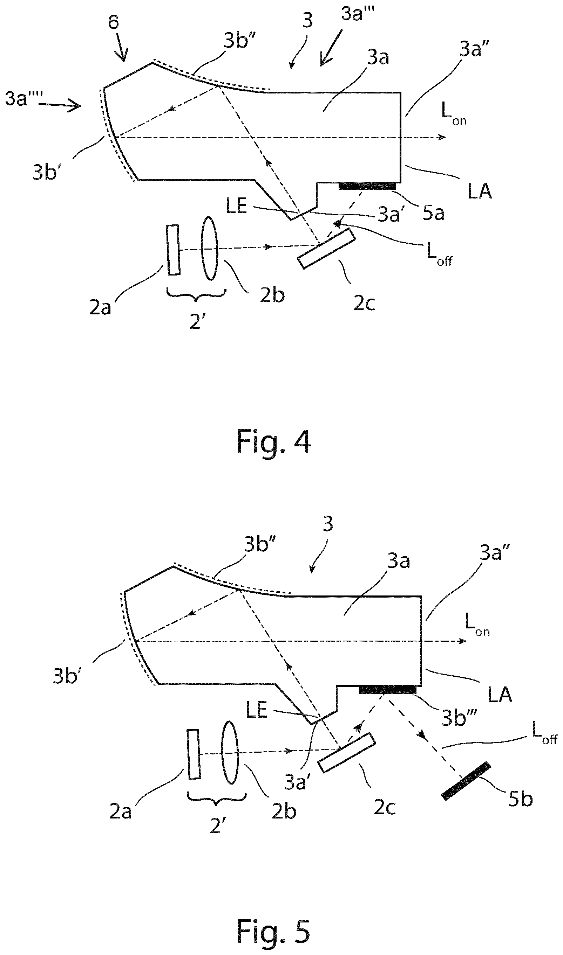

Fig. 3 zeigt eine zu Fig. 2 alternative Ausführungsform des Linsensystems 3. Darin ist die zweite Spiegelfläche 3b" als konvexer Spiegel und die erste Spiegelfläche 3b' als konkaver Spiegel ausgebildet. Dies trifft auch für die Ausführungsformen gemäß Fig. 4 und 5 zu.

Die Ausführungen gemäß Fig. 4 und 5 zeigen eine komplexere geometrische Form eines optisch wirksamen Körpers 3a bzw. eines dadurch ausgebildeten Linsensystems 3, bei dem die Abstrahlung der Lichtquelle 2a in Richtung der Hauptabstrahlrichtung der Endlichtverteilung erfolgt. Im Detail zeigt Figur 4 eine schematische Seitendarstellung eines Linsensystems 3 eines erfindungsgemäßen Fahrzeugscheinwerfers 1 in Verbindung mit einem zugehörigen Lichtmodul 2 in einer dritten Ausführungsform. Darin ist vorgesehen, dass der optisch wirksame Körper 3a in einer Längsschnittdarstellung eine dritte 3a‴ und vierte Seite 3aʺʺ aufweist, wobei der optisch wirksame Körper 3a durch die vier aneinander angrenzende zueinander geneigte Seiten gebildet aus erster 3a' bis vierter Seite 3aʺʺ umschlossen ist, wobei die erste Spiegelfläche an der dritten Seite 3a‴ und die zweite Spiegelfläche an der vierten Seite 3aʺʺ angeordnet ist und die erste 3a' und die zweite Seite 3a" im Wesentlichen L-förmig aneinander angrenzen. Zudem kann in dieser Ausführungsform vorgesehen sein, dass die Lichteintrittsfläche LE sowie der erste 3b' und der zweite Spiegel 3b" dergestalt ausgebildet und angeordnet sind, dass sich die über die Lichteintrittsfläche LE in den optisch wirksamen Körper 3a eintretenden Lichtstrahlen Lₒₙ - gesehen als eine Normalprojektion auf einen Längsschnitt durch den optisch wirksamen Körper 3a - sich innerhalb von optischen Körper 3a kreuzen (wie in Fig. 4 und 5 erkennbar ist; der Längsschnitt erfolgt dabei z.B. parallel zur Zeichnungsblattebene von der zweiten Seite 3a" hin zur vierten Seite 3aʺʺ). Zudem kann in dieser Ausführungsform vorgesehen sein, dass der optisch wirksame Körper 3a entlang seiner kürzesten oberflächigen Verbindung von erster 3b' und zweiter Spiegelfläche 3b" (d.h. im vorliegenden Beispiel entlang der linken oberen Oberfläche 6), frei von der Lichteintrittsfläche LE und der Lichtaustrittsfläche LA ist. Das bedeutet, dass an dieser Oberfläche 6 weder die Lichteintrittsfläche LE noch die Lichtaustrittsfläche LA angeordnet ist.

Figuren 2 bis 4 zeigen zudem, dass neben der jeweiligen Lichteintrittsfläche LE des optisch wirksamen Körpers 3a auf dem optisch wirksamen Körper 3a eine lichtundurchlässige lichtabsorbierende Absorberfläche 5a angeordnet sein kann, die dergestalt angeordnet ist, dass die von dem DMD-Modul 2c in einer Off-Stellung reflektierten Lichtstrahlen an der Absorberfläche 5a absorbiert werden.

Alternativ dazu kann auch - wie z.B. in der vierten Ausführungsform gemäß Fig. 5 gezeigt - eine von dem optisch wirksamen Körper 3a räumliche getrennte Absorbereinheit 5b zur Absorption von Licht vorgesehen sein. In diesem Fall kann neben der Lichteintrittsfläche LE des optisch wirksamen Körpers 3a auf dem optisch wirksamen Körper 3a eine dritte Spiegelfläche 3b‴ angeordnet sein, die dergestalt ausgebildet ist, dass die von dem DMD-Modul 2c in einer Off-Stellung reflektierten Lichtstrahlen L_{off} über die dritte Spiegelfläche 3b‴ hin zu der Absorbereinheit 5b reflektiert werden. Auf diese Weise kann ein durch die Absorption von L_{off}-Strahlen erfolgender Wärmeeintrag in den optisch wirksamen Körper 3a verhindert werden.

Vorzugsweise kann bei allen Ausführungsformen vorgesehen sein, dass die Auflösung der Endlichtverteilung des Fahrzeugscheinwerfers 1 dergestalt gewählt ist, dass zumindest einzelne einzeln ansteuerbare Leuchtpixel einen Raumwinkel von weniger als 0,1° sowohl in horizontaler als auch vertikaler Richtung ausleuchten. In allen Varianten ist vorgesehen, dass das Linsensystem 3 eine unverstellbare, feste Brennweite aufweist. Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Hochauflösender Fahrzeugscheinwerfer (1), insbesondere Kraftfahrzeugscheinwerfer, umfassend
- ein Lichtmodul (2) zur Abgabe einer hochauflösend dynamisch veränderbaren Zwischenlichtverteilung,
- ein dem Lichtmodul (2) nachgelagertes optisches Linsensystem (3) zur Projektion der durch das Lichtmodul (2) abgestrahlten Zwischenlichtverteilung in Form einer Endlichtverteilung auf einen vor den Fahrzeugscheinwerfer befindlichen Bereich, insbesondere eine Fahrbahn (4), wobei das Linsensystem (3) einen aus einem einzigen Guss hergestellten optisch wirksamen Körper (3a) mit einer auf einer ersten Seite (3a') liegenden Lichteintrittsfläche (LE) und einer auf einer dazu beabstandeten zweiten Seite (3a") angeordneten Lichtaustrittsfläche (LA) umfasst, wobei der optisch wirksame Körper (3a) aus lichtdurchlässigem Material besteht, und im Strahlengang von der Lichteintrittsfläche (LE) zur Lichtaustrittsfläche (LA) zwei voneinander beabstandete lichtformende Spiegelflächen (3b', 3b") an oder in dem optisch wirksamen Körper (3a) ausgebildet sind, die dergestalt ausgeformt sind, dass
* über die Lichteintrittsfläche (LE) in den Körper (3a) eintretendes und auf eine lichtformende zweite Spiegelfläche (3b") auftreffendes Licht auf eine erste Spiegelfläche (3b') reflektiert
* und über diese lichtformende erste Spiegelfläche (3b') in Richtung der zweiten Seite (3a") reflektiert und durch die an der zweiten Seite (3a") angeordnete Lichtaustrittsfläche (LA) aus dem Körper (3a) nach außen abgestrahlt wird, wobei das Linsensystem eine unverstellbare, feste Brennweite aufweist,
**dadurch gekennzeichnet, dass**
das Lichtmodul (2) zur Abgabe der hochauflösend dynamisch veränderbaren Zwischenlichtverteilung ein Lichtquellensystem (2') zur Abgabe parallel gerichteter Lichtstrahlen sowie ein DMD-Modul (2c) umfasst, wobei das DMD-Modul (2c) zur Reflexion des parallel gerichtenten Lichts des Lichtquellensystems (2') eingerichtet ist und damit zur Abstrahlung der hochauflösenden dynamisch veränderbaren Zwischenlichtverteilung auf die Lichteintrittsfläche (LE) des optisch wirksamen Körpers (3a) eingerichtet ist, wobei die Lichteintrittsfläche (LE) und die Lichtaustrittsfläche des optisch wirksamen Körpers (3a) plan ausgebildet ist und das DMD-Modul (2c) sowie der optisch wirksame Körper (3a) dergestalt zueinander orientiert und ausgebildet sind, dass die Lichtstrahlen der von dem DMD-Modul (2c) abgestrahlten Zwischenlichtverteilung orthogonal auf die Lichteintrittsfläche (LE) des optisch wirksamen Körpers (3a) einfallen, durch die lichtformende zweite (3b") und erste Spiegelfläche (3b') geformt werden und zur Ausbildung der Endlichtverteilung orthogonal durch die Lichtaustrittsfläche (LA) des optisch wirksamen Körpers (3a) austreten.

2. Fahrzeugscheinwerfer (1) nach Anspruch 1, wobei die erste Spiegelfläche (3b') auf der ersten Seite (3a') angeordnet ist und an die Lichteintrittsfläche (LE) angrenzt.

3. Fahrzeugscheinwerfer (1) nach Anspruch 1 oder 2, wobei die zweite Spiegelfläche (3b") auf der zweiten Seite (3a") angeordnet ist und an die Lichtaustrittfläche (LA) angrenzt.

4. Fahrzeugscheinwerfer (1) nach einem der vorhergehenden Ansprüche, wobei die zweite Spiegelfläche (3b") als konkaver Spiegel und die erste Spiegelfläche (3b') als konvexer Spiegel ausgebildet ist.

5. Fahrzeugscheinwerfer (1) nach einem der Ansprüche 1 bis 4, wobei die zweite Spiegelfläche (3b") als konvexer Spiegel und die erste Spiegelfläche (3b') als konkaver Spiegel ausgebildet ist.

6. Hochauflösender Fahrzeugscheinwerfer (1) nach einem der vorhergehenden Ansprüche, wobei die erste und die zweite lichtformende Spiegelfläche (3b', 3b") ausgebildet sind, indem die erste (3a') und die zweite Seite (3a") des optisch wirksamen Körpers jeweils in einem Abschnitt mit spiegelndem Material beschichtet sind, und zwar so, dass
* über die Lichteintrittsfläche (LE) in den Körper (3a) eintretendes und auf eine an der zweiten Seite (3a") angeordnete lichtformende zweite Spiegelfläche (3b") auftreffendes Licht zurück auf eine an der ersten Seite (3a') angeordnete lichtformende erste Spiegelfläche (3b') reflektiert
* und über diese lichtformende erste Spiegelfläche (3b') wieder in Richtung der zweiten Seite (3a") reflektiert und durch die an der zweiten Seite (3a") angeordnete Lichtaustrittsfläche (LA) aus dem Körper (3a) nach außen abgestrahlt wird.

7. Fahrzeugscheinwerfer (1) nach einem der Ansprüche 1 bis 5, wobei der optisch wirksame Körper (3a) in einer Längsschnittdarstellung eine dritte (3a‴) und vierte Seite (3aʺʺ) aufweist, wobei der optisch wirksame Körper (3a) durch die vier aneinander angrenzende zueinander geneigte Seiten gebildet aus erster (3a') bis vierter Seite (3aʺʺ) umschlossen ist, wobei die erste Spiegelfläche an der dritten Seite (3a‴) und die zweite Spiegelfläche an der vierten Seite (3aʺʺ) angeordnet ist und die erste (3a') und die zweite Seite (3a") im Wesentlichen L-förmig aneinander angrenzen.

8. Fahrzeugscheinwerfer (1) nach einem der vorhergehenden Ansprüche, wobei die Lichteintrittsfläche (LE) sowie der erste (3b') und der zweite Spiegel (3b") dergestalt ausgebildet und angeordnet sind, dass sich die über die Lichteintrittsfläche (LE) in den optisch wirksamen Körper (3a) eintretenden Lichtstrahlen (Lₒₙ) - gesehen als eine Normalprojektion auf einen Längsschnitt durch den optisch wirksamen Körper (3a) - sich innerhalb von optischen Körper (3a) kreuzen.

9. Fahrzeugscheinwerfer (1) nach Anspruch 7 und 8, wobei der optisch wirksame Körper (3a) entlang seiner kürzesten oberflächigen Verbindung von erster (3b') und zweiter Spiegelfläche (3b") frei von der Lichteintrittsfläche (LE) und der Lichtaustrittsfläche (LA) ist.

10. Fahrzeugscheinwerfer (1) nach einem der vorhergehenden Ansprüche, wobei neben der Lichteintrittsfläche (LE) des optisch wirksamen Körpers (3a) auf dem optisch wirksamen Körper (3a) eine lichtundurchlässige lichtabsorbierende Absorberfläche (5a) angeordnet ist, die dergestalt angeordnet ist, dass die von dem DMD-Modul (2c) in einer Off-Stellung reflektierten Lichtstrahlen an der Absorberfläche (5a) absorbiert werden.

11. Fahrzeugscheinwerfer (1) nach einem der Ansprüche 1 bis 9, wobei eine von dem optisch wirksamen Körper (3a) räumliche getrennte Absorbereinheit (5b) zur Absorption von Licht vorgesehen ist, und neben der Lichteintrittsfläche (LE) des optisch wirksamen Körpers (3a) auf dem optisch wirksamen Körper (3a) eine dritte Spiegelfläche (3b‴) angeordnet ist, die dergestalt ausgebildet ist, dass die von dem DMD-Modul (2c) in einer Off-Stellung reflektierten Lichtstrahlen über die dritte Spiegelfläche (3b‴) hin zu der Absorbereinheit (5b) reflektiert werden.

12. Fahrzeugscheinwerfer (1) nach einem der vorhergehenden Ansprüche, wobei die Auflösung der Endlichtverteilung des Fahrzeugscheinwerfers (1) dergestalt gewählt ist, dass zumindest einzelne einzeln ansteuerbare Leuchtpixel einen Raumwinkel von weniger als 0,1° sowohl in horizontaler als auch vertikaler Richtung ausleuchten.

13. Fahrzeugscheinwerfer (1) nach einem der vorhergehenden Ansprüche, wobei die zweite Seite (3a") des optisch wirksamen Körpers (3a) der ersten Seite (3a') gegenüber liegt.

14. Fahrzeug, umfassend einen Fahrzeugscheinwerfer (1) nach einem der vorhergehenden Ansprüche.

## Claims

1. High-resolution vehicle headlamp (1), in particular a motor vehicle headlamp, comprising
- a light module (2) for emitting a high-resolution, dynamically variable intermediate light distribution,
- an optical lens system (3) located downstream of the light module (2) for projecting the intermediate light distribution emitted by the light module (2) in the form of a final light distribution onto an area located in front of the vehicle headlamp, in particular a roadway (4), wherein the lens system (3) comprises an optically effective body (3a) produced from a single casting and having a light entry surface (LE) located on a first side (3a') and a light exit surface (LA) arranged on a second side (3a") spaced apart therefrom, wherein the optically effective body (3a) consists of translucent material, and two light-forming mirror surfaces (3b', 3b") are formed on or in the optically effective body (3a) in the beam path from the light entry surface (LE) to the light exit surface (LA), which are spaced apart from one another and are shaped in such a way that
* light entering the body (3a) via the light-entry surface (LE) and impinging on a light-forming second mirror surface (3b") is reflected onto a first mirror surface (3b')
* and is reflected via this light-forming first mirror surface (3b') in the direction of the second side (3a") and is emitted outwards from the body (3a) through the light exit surface (LA) arranged on the second side (3a"), the lens system having an unadjustable, fixed focal length,
**characterized in that**
the light module (2) for emitting the high-resolution, dynamically variable intermediate light distribution comprises a light source system (2') for emitting parallel-directed light beams and a DMD module (2c), the DMD module (2c) being set up to reflect the parallel-directed light of the light source system (2') and thus being set up to emit the high-resolution, dynamically variable intermediate light distribution onto the light entry surface (LE) of the optically effective body (3a), wherein the light entry surface (LE) and the light exit surface of the optically effective body (3a) are flat and the DMD module (2c) and the optically effective body (3a) are oriented and designed in such a way relative to one another, that the light beams of the intermediate light distribution emitted by the DMD module (2c) are incident orthogonally on the light entry surface (LE) of the optically effective body (3a), are formed by the light-forming second (3b") and first mirror surface (3b') and emerge orthogonally through the light exit surface (LA) of the optically effective body (3a) to form the final light distribution.

2. Vehicle headlamp (1) according to claim 1, wherein the first mirror surface (3b') is arranged on the first side (3a') and adjoins the light entry surface (LE).

3. Vehicle headlamp (1) according to claim 1 or 2, wherein the second mirror surface (3b") is arranged on the second side (3a") and adjoins the light-emitting surface (LA).

4. Vehicle headlamp (1) according to one of the preceding claims, wherein the second mirror surface (3b") is designed as a concave mirror and the first mirror surface (3b') is designed as a convex mirror.

5. Vehicle headlamp (1) according to any one of claims 1 to 4, wherein the second mirror surface (3b") is designed as a convex mirror and the first mirror surface (3b') is designed as a concave mirror.

6. High-resolution vehicle headlamp (1) according to one of the preceding claims, wherein the first and second light-forming mirror surfaces (3b', 3b") are formed in that the first (3a') and the second side (3a") of the optically active body are each coated with reflective material in a section such that
* light entering the body (3a) via the light entry surface (LE) and impinging on a light-forming second mirror surface (3b") arranged on the second side (3a") is reflected back onto a light-forming first mirror surface (3b') arranged on the first side (3a')
* and is reflected back towards the second side (3a") via this light-forming first mirror surface (3b') and emitted outwards from the body (3a) through the light-emitting surface (LA) arranged on the second side (3a").

7. Vehicle headlamp (1) according to one of claims 1 to 5, wherein the optically effective body (3a) has a third (3a‴) and fourth side (3aʺʺ) in a longitudinal sectional view, wherein the optically effective body (3a) is enclosed by the four adjacent sides inclined towards each other and formed by the first (3a') to fourth side (3aʺʺ), the first mirror surface being arranged on the third side (3a‴) and the second mirror surface being arranged on the fourth side (3aʺʺ) and the first (3a') and the second side (3a") adjoining one another in a substantially L-shaped manner.

8. Vehicle headlamp (1) according to one of the preceding claims, wherein the light entry surface (LE) and the first (3b') and the second mirror (3b") are designed and arranged in such a way that the light beams (Lon) entering the optically effective body (3a) via the light entry surface (LE) - viewed as a normal projection onto a longitudinal section through the optically effective body (3a) - intersect within the optical body (3a).

9. Vehicle headlamp (1) according to claims 7 and 8, wherein the optically effective body (3a) is free of the light entry surface (LE) and the light exit surface (LA) along its shortest surface connection of first (3b') and second mirror surface (3b").

10. Vehicle headlamp (1) according to one of the preceding claims, wherein a light-impermeable light-absorbing absorber surface (5a) is arranged next to the light entry surface (LE) of the optically effective body (3a) on the optically effective body (3a), which absorber surface is arranged in such a way that the light rays reflected by the DMD module (2c) in an off position are absorbed at the absorber surface (5a).

11. Vehicle headlamp (1) according to one of claims 1 to 9, wherein an absorber unit (5b) spatially separated from the optically effective body (3a) is provided for absorbing light, and a third mirror surface (3b‴) is arranged on the optically effective body (3a) next to the light entry surface (LE) of the optically effective body (3a), which is designed in such a way that the light beams reflected by the DMD module (2c) in an off position are reflected via the third mirror surface (3b‴) towards the absorber unit (5b).

12. Vehicle headlamp (1) according to one of the preceding claims, wherein the resolution of the final light distribution of the vehicle headlamp (1) is selected in such a way that at least individual individually controllable light pixels illuminate a solid angle of less than 0.1° both in the horizontal and vertical direction.

13. Vehicle headlamp (1) according to one of the preceding claims, wherein the second side (3a") of the optically effective body (3a) is opposite the first side (3a').

14. Vehicle, comprising a vehicle headlamp (1) according to one of the preceding claims.

## Revendications

1. Projecteur de véhicule à haute résolution (1), en particulier projecteur de véhicule automobile, comprenant
- un module d'éclairage (2) pour l'émission d'une répartition de lumière intermédiaire à haute résolution et dynamiquement modifiable,
- un système de lentilles optiques (3) placé en aval du module lumineux (2) pour projeter la répartition de lumière intermédiaire émise par le module lumineux (2) sous la forme d'une répartition de lumière finale sur une zone se trouvant devant le projecteur de véhicule, en particulier une chaussée (4), le système de lentilles (3) comprenant un corps à effet optique (3a) fabriqué à partir d'une seule coulée, avec une surface d'entrée de lumière (LE) située sur un premier côté (3a') et une surface de sortie de lumière (LA) disposée sur un deuxième côté (3a") espacé du premier, le corps optiquement actif (3a) étant constitué d'un matériau translucide, et deux surfaces réfléchissantes (3b', 3b") de mise en forme de la lumière, espacées l'une de l'autre, étant formées sur ou dans le corps optiquement actif (3a) dans le trajet des rayons allant de la surface d'entrée de la lumière (LE) à la surface de sortie de la lumière (LA), lesquelles sont formées de telle sorte que
* la lumière entrant dans le corps (3a) par la surface d'entrée de la lumière (LE) et frappant une deuxième surface de miroir de formation de la lumière (3b") est réfléchie sur une première surface de miroir (3b')
* et est réfléchie en direction du deuxième côté (3a") par l'intermédiaire de cette première surface de miroir (3b') formant la lumière et est émise vers l'extérieur du corps (3a) par la surface de sortie de lumière (LA) disposée sur le deuxième côté (3a"), le système de lentilles présentant une distance focale fixe et non réglable,
**caractérisé en ce que**
le module de lumière (2) comprend, pour l'émission de la répartition de lumière intermédiaire à haute résolution et dynamiquement modifiable, un système de source de lumière (2') pour l'émission de rayons lumineux parallèles ainsi qu'un module DMD (2c), le module DMD (2c) étant conçu pour réfléchir la lumière parallèle du système de source de lumière (2') et étant ainsi conçu pour émettre la répartition de lumière intermédiaire à haute résolution et dynamiquement modifiable sur la surface d'entrée de lumière (LE) du corps optiquement actif (3a), la surface d'entrée de la lumière (LE) et la surface de sortie de la lumière du corps optiquement actif (3a) étant planes et le module DMD (2c) ainsi que le corps optiquement actif (3a) étant orientés et formés l'un par rapport à l'autre de telle sorte, que les rayons lumineux de la répartition lumineuse intermédiaire émise par le module DMD (2c) tombent orthogonalement sur la surface d'entrée de lumière (LE) du corps optiquement actif (3a), sont formés par la deuxième (3b") et la première (3b') surfaces réfléchissantes de formation de lumière et sortent orthogonalement par la surface de sortie de lumière (LA) du corps optiquement actif (3a) pour former la répartition lumineuse finale.

2. Projecteur de véhicule (1) selon la revendication 1, dans lequel la première surface de miroir (3b') est disposée sur le premier côté (3a') et est adjacente à la surface d'entrée de lumière (LE).

3. Projecteur de véhicule (1) selon la revendication 1 ou 2, dans lequel la deuxième surface de miroir (3b") est disposée sur le deuxième côté (3a") et est adjacente à la surface de sortie de lumière (LA).

4. Projecteur de véhicule (1) selon l'une quelconque des revendications précédentes, dans lequel la deuxième surface de miroir (3b") est un miroir concave et la première surface de miroir (3b') est un miroir convexe.

5. Projecteur de véhicule (1) selon l'une des revendications 1 à 4, dans lequel la deuxième surface de miroir (3b") est un miroir convexe et la première surface de miroir (3b') est un miroir concave.

6. Projecteur de véhicule à haute résolution (1) selon l'une quelconque des revendications précédentes, dans lequel la première et la deuxième surface de miroir de formation de lumière (3b', 3b") sont formées en revêtant la première (3a') et la deuxième face (3a") du corps optiquement actif respectivement dans une section avec un matériau réfléchissant, et ce de telle sorte que
* la lumière qui pénètre dans le corps (3a) par la surface d'entrée de la lumière (LE) et qui frappe une deuxième surface réfléchissante (3b") formant la lumière, disposée sur le deuxième côté (3a"), est réfléchie en retour sur une première surface réfléchissante (3b') formant la lumière, disposée sur le premier côté (3a')
* et est à nouveau réfléchie en direction du deuxième côté (3a") par l'intermédiaire de cette première surface de miroir (3b') formant la lumière et est émise vers l'extérieur du corps (3a) par la surface de sortie de lumière (LA) disposée sur le deuxième côté (3a").

7. Projecteur de véhicule (1) selon l'une quelconque des revendications 1 à 5, dans lequel le corps optiquement actif (3a) présente, dans une représentation en coupe longitudinale, un troisième (3a‴) et un quatrième côté (3a""), le corps optiquement actif (3a) étant entouré par les quatre côtés adjacents inclinés les uns par rapport aux autres formés du premier (3a') au quatrième côté (3a""), la première surface de miroir étant disposée sur le troisième côté (3a‴) et la deuxième surface de miroir sur le quatrième côté (3a""), et le premier (3a') et le deuxième côté (3a") étant sensiblement contigus en forme de L.

8. Projecteur de véhicule (1) selon l'une des revendications précédentes, dans lequel la surface d'entrée de la lumière (LE) ainsi que le premier (3b') et le deuxième miroir (3b") sont conçus et disposés de telle sorte que les rayons lumineux (Lon) entrant dans le corps optiquement actif (3a) par la surface d'entrée de la lumière (LE) - vus comme une projection normale sur une coupe longitudinale à travers le corps optiquement actif (3a) - se croisent à l'intérieur du corps optique (3a).

9. Projecteur de véhicule (1) selon les revendications 7 et 8, dans lequel le corps optiquement actif (3a) est dépourvu de la surface d'entrée de lumière (LE) et de la surface de sortie de lumière (LA) le long de sa plus courte liaison superficielle entre la première (3b') et la deuxième (3b") surface de miroir.

10. Projecteur de véhicule (1) selon l'une des revendications précédentes, dans lequel, à côté de la surface d'entrée de lumière (LE) du corps optiquement actif (3a), une surface absorbante opaque (5a) est disposée sur le corps optiquement actif (3a) de telle sorte que les rayons lumineux réfléchis par le module DMD (2c) dans une position off sont absorbés sur la surface absorbante (5a).

11. Projecteur de véhicule (1) selon l'une des revendications 1 à 9, dans lequel une unité d'absorption (5b) séparée spatialement du corps optiquement actif (3a) est prévue pour absorber la lumière, et une troisième surface de miroir (3b‴) est disposée sur le corps optiquement actif (3a) à côté de la surface d'entrée de lumière (LE) du corps optiquement actif (3a), qui est conçue de telle sorte que les rayons lumineux réfléchis par le module DMD (2c) dans une position off sont réfléchis vers l'unité d'absorption (5b) via la troisième surface de miroir (3b‴).

12. Projecteur de véhicule (1) selon l'une des revendications précédentes, dans lequel la résolution de la répartition de la lumière finale du projecteur de véhicule (1) est choisie de telle sorte qu'au moins certains pixels lumineux pouvant être commandés individuellement éclairent un angle solide inférieur à 0,1° aussi bien dans la direction horizontale que dans la direction verticale.

13. Projecteur de véhicule (1) selon l'une des revendications précédentes, dans lequel le deuxième côté (3a") du corps optiquement actif (3a) est opposé au premier côté (3a').

14. Véhicule comprenant un projecteur de véhicule (1) selon l'une quelconque des revendications précédentes.
